Europäisches Patentamt

European Patent Office

Office européen des brevets

(19)

(11) **EP 1 662 491 A1**

(12) **EUROPEAN PATENT APPLICATION**
published in accordance with Art. 158(3) EPC

(43) Date of publication:
**31.05.2006 Bulletin 2006/22**

(51) Int Cl.:
***G11B 7/0045*** (2000.01)   ***G11B 7/125*** (1985.01)

(21) Application number: **04771713.7**

(22) Date of filing: **16.08.2004**

(86) International application number:
**PCT/JP2004/011752**

(87) International publication number:
**WO 2005/022514 (10.03.2005 Gazette 2005/10)**

(84) Designated Contracting States:
**DE ES FR GB IT NL**

(30) Priority: **28.08.2003 JP 2003304541**

(71) Applicant: **Ricoh Company, Ltd.**
**Tokyo 143-8555 (JP)**

(72) Inventors:
• **KATO, Masaki**
**Sagamihara-shi,**
**Kanagawa 2280811 (JP)**
• **OHKURA, Hiroko**
**Yokohama-shi,**
**Kanagawa 2240034 (JP)**

• **ITO, Kazunori**
**Yokohama-shi,**
**Kanagawa 2240006 (JP)**
• **DEGUCHI, Hiroshi**
**Yokohama-shi,**
**Kanagawa 2320026 (JP)**
• **ABE, Mikiko**
**Kawasaki-shi,**
**Kanagawa 2100804 (JP)**

(74) Representative: **Mounteney, Simon James**
**Marks & Clerk**
**90 Long Acre**
**London WC2E 9RA (GB)**

(54) **INFORMATION RECORDING METHOD, OPTICAL INFORMATION RECORDING MEDIUM, AND INFORMATION RECORDING DEVICE**

(57) An optical information recording method is disclosed, which is for recording information at constant linear density in an optical recording medium that is rotated at a constant angular speed, the recording being carried out by irradiating a laser beam that contains the same number of mark recording periods that consist of a heating power period and a cooling power period. According to the optical information recording method, a mark having a length equivalent to an even number times a basic clock period is formed by a pulse train generated with a period equivalent to twice the basic clock period; and a mark having a length equivalent to an odd number times the basic clock period is formed by a pulse train where the first mark recording period is delayed by a first time, and the first mark recording period and the second last mark recording period are made longer than twice the basic clock period.

FIG.2

EP 1 662 491 A1

**Description**

BACKGROUND OF THE INVENTION

[Field of the Invention]

The present invention relates to a phase-change type optical information recording medium that can be overwritten, such as CD-RW, DVD-RAM, DVD-RW, and DVD+RW disks, an information recording method suitable therefor, and an information recording apparatus therewith.

[Background of the Invention]

With recent and continuing development of the multimedia technology, an information recording medium is required to be capable of high-speed recording and high-speed replay of large volumes of digital information such as moving pictures and sound. To meet such requirements, phase-change type optical information recording media that are rewritable and portable attract attention. Especially, CD-RW, DVD-RW, and DVD+RW disks draw attention as portable and compatible information recording media because they are portable and capable of being replayed with DVD-ROM players that are already wide-spread.

In order to raise the recording speed and the replay speed of information of the phase-change type information recording media, higher density recording capability and improvement in scanning speed are indispensable.

However, the higher density recording capability attained by change of track pitch and/or the minimum mark size requires change of the optical system of a replay apparatus; that is, the DVD-ROM players cannot be used. On the other hand, raising the scanning speed does not require the change of the optical system; for this reason, raising the scanning speed is considered to provide effective means for enhancing the information recording and replay speed, maintaining compatibility with the DVD-ROM players.

Here, writing and rewriting of information to a phase-change type optical recording medium are performed by heat control, the heat being applied to a recording layer of the optical recording medium by irradiation of a laser beam.

That is, a mark is formed by creating an amorphous state of the recording layer by heating, fusing, and quickly cooling a composite material (recording layer); and the recorded mark is erased by heating the composite material at a temperature lower than the fusion temperature, and thereby forming a crystal state.

Therefore, in order to obtain higher-speed recording, it is necessary to change the composite material into the crystal state in a short heating time; accordingly, it is indispensable to use a material having a high speed of crystallization as the composite material of the recording layer. Further, in order to record marks having two or more different lengths at constant density by irradiating an optical beam that is intensity modulated by a multi-pulse train to the recording layer that is rotated at a fixed speed, it is necessary to change the scanning speed according to the position in the radius direction. Specifically, a shorter clock period, and a narrower pulse width of the multi-pulse train are required at an outer section than at an inner section.

However, in the case of the material having the quick speed of crystallization, crystallization is promoted by the remaining heat of an adjacent pulse; for this reason, an amorphous region tends to become small. Accordingly, there is a limit in obtaining high speed recording by narrowing the pulse width, that is, it is difficult to obtain a high modulation factor by raising the scanning speed.

The objects can be achieved by lengthening the time to form the amorphous state by a mark recording period that consists of a pair of a period of heating and a period of cooling the recording layer, and by preventing the crystallization from being promoted by the remaining heat. Then, in order to implement this, there is a proposal wherein the mark recording period of the laser beam, which is conventionally 1T, is lengthened to 2T or greater (T being a basic clock period), providing a longer time for forming the amorphous state.

For example, "2T Write Strategy" is standardized, wherein a mark having a period of 2mT, and a mark having a period (2m+1)T are recorded by m mark recording periods (here, m is a natural number) contained in the laser beam irradiated to the recording layer. Further, in the case of recording the two kinds of the marks, having different lengths, by the same number of mark recording periods, the (2m+1)T mark is recorded with a longer heating power period for the last recording period, a delay of a heating start time (rise time of the last heating period), and a longer cooling power period (the length of the cooling period) as compared with the 2mT mark (Non-Patent Reference 1).

In addition, as a technology of recording a mark having a length of nT by m mark recording periods, a method of setting n/m>=1.25 is proposed, wherein an implementation of making the recording period of a mark into about twice the basic clock period, and a method of compensating for the mark length by the last heating period is disclosed (Patent Reference 1).

Further, a method of providing high-speed recording is disclosed, wherein the length of the last cooling power period is adjusted in the "2T Write Strategy" that is referenced as Non-Patent Reference 1 (Patent Reference 2).

Furthermore, another method is proposed, wherein the mark length is adjusted by making an ending part of the pulse in the last cooling power period into steps, and by further adjusting the level in the "2T Write Strategy" (Patent Reference 3).

Further, a method of adjusting the width of the first cooling power period according to the mark length and a preceding space length (Patent Reference 4), and a method of changing the rise time of the first heating power period according to the scanning speed (Patent Reference 5) are proposed.

[Patent reference 1] JPA 2001-331936
[Patent reference 2] JPA 2003-085750
[Patent reference 3] JPA 2002-334433
[Patent reference 4] Japanese Patent No. 3138610
[Patent reference 5] JPA 2001-118245

DISCLOSURE OF THE INVENTION

[Problem(s) to be solved by the Invention]

However, according to the 2T period recording strategy, when recording a mark having a length nT (n is a natural number equal to or greater than 3), the pattern of the multi-pulse becomes different dependent upon whether n is an even number or an odd number. This is because two kinds of marks, namely, a 2mT mark and a 2(m+1)T mark, are recorded by the same number of mark recording periods, each period consisting of a pair of the heating power period and the cooling power period. Furthermore, in order to record information at constant density onto a disk that rotates at a constant speed, it is necessary to change the scanning speed for the inner periphery of the disk and the perimeter section, that is, the scanning speed has to be adjusted according to the scanning position in the radius direction of the disk.

For this reason, the irradiation pattern of the laser beam becomes highly complicated in order to fulfill both needs of recording at the scanning speed that changes according to the scanning position, and recording two kinds of marks by the same number of mark recording periods.

On the other hand, it is difficult to apply the technologies or methods proposed by Non-Patent Reference 1 and Patent References 1 through 5 as they are to a recording speed of, e.g., 8X of DVD+RW.

Specifically, the implementation of the 2T period according to the Patent Reference 1 is the technology supposing recording at 4X speed of DVD+RW, and no reliable recording is available at the 8X speed. Further, according to the technologies or methods proposed by Non-Patent Reference 1 and Patent References 1 through 5, no specific reference is made concerning control of the first heating power period and a relationship between the mark recording periods for the 2mT and 2(m+1)T mark lengths, which control is necessary when recording the two kinds of marks by the same number of mark recording periods, and no specific reference is made about a relationship with the scanning speed.

In view of the situation described above, the present invention aims at offering an information recording method, an optical information recording medium, and an information recording apparatus that provide a recording strategy that can be defined by fewer parameters than conventional for the phase-change type optical information recording medium, crystallization speed of which is high, rotating at a constant angular speed (CAV), and that can record information at varying scanning speeds.

[Means for solving the Problem]

According to the optical information recording method of the present invention, a mark is recorded onto an optical recording medium that is rotationally driven at a constant speed by reversible phase change caused by irradiating a laser beam driven by a pulse that is intensity modulated, the laser beam being irradiated in sync with a basic clock, the period of which varies in inverse proportion to the moving speed at a position in radius directions, wherein marks having different lengths are formed by repeating mark recording periods contained in the irradiation period of the laser beam, each of the mark recording periods consisting of a heating power period, during which the optical recording medium is fused, and a cooling power period, during which the optical recording medium is cooled; thus, information recording at constant linear density is obtained. Further, according to the optical information recording method of the present invention, an even-number-times-mark, length of which is an even number times the length of the basic clock period (i.e., 2mT), and an odd-number-times mark, length of which is 1T longer than the even-number-times mark (i.e., (2m+1)T) are formed by the laser beam containing the same number of the mark recording periods as follows. The even-number-times mark is formed by irradiating the laser beam driven by a pulse train generated with twice the period of the basic clock, in sync with the basic clock, as for mark recording periods except the last mark recording period contained in the laser beam. The odd-number-times mark is formed by delaying the first mark recording period of the mark recording periods contained in the laser beam by a first time with reference to the first mark recording period for forming the even-number-times mark,

by generating the first mark recording period and the second last mark recording period at a period that is longer than twice the basic clock period by a predetermined time, and

by irradiating the laser beam driven by the pulse train generated with twice the period of the basic clock in sync with the basic clock during other mark recording periods.

As described above, the even-number-times mark and the odd-number-times mark are formed by the laser beam that contains the same number of mark recording periods; for this reason, it becomes possible that each mark recording period contained in the laser beam is made into approximately twice the basic clock period. Accordingly, even when high-speed recording is performed, since it is not necessary to narrow the pulse width of the multi-pulse for driving the laser compared with the conventional technologies., influence due to degraded jitter and a fall of power resulting from the response speed of the laser is reduced.

Here, although the multi-pulse pattern has to be different depending on whether the mark length n is an even number (2m) or an odd number (2m+1) because of recording two kinds of marks, namely, the even-number-times mark and the odd-number-times mark with reference to the basic clock period, the even-number-times mark can be driven by the pulse train generated with twice the period of the basic clock, and accordingly, circuit arrangement is simplified.

Furthermore, an odd-number-times mark (n=5 or greater) can be formed with the same heating power period as an even-number-times mark, except that the first mark recording period is delayed by the first time, and that the length of the first mark recording period and the length of the second last mark recording period are made longer than twice the basic clock period by corresponding predetermined times. Accordingly, a delaying unit, an edge generating unit, and the like are needed in addition to the case where the even-number-times mark is formed; however, a simple additional circuit serves the purpose. Here, the first mark recording period and the second last mark recording period are made longer than twice the basic clock period by a second time and a third time, respectively; it is desirable that the second time and the third time be set equal to each other.

Furthermore, since the information recording method of the present invention records information at constant linear density without changing the rotational speed of the disk, time parameters such as described above have to be adjusted according to the linear speed of the disk in the direction of the rotation (moving speed). The time parameters include

the mark recording period (consisting of the heating power period and the cooling power period),

the first time, by which the first mark recording period is delayed when recording the odd-number-times mark with reference to the first mark recording period for recording the even-number-times mark,

the second time, by which the first mark recording period is extended with reference to twice the basic clock period,

the third time, by which the second last mark recording period is extended with reference to twice the basic clock period, and

a fourth time that defines the cooling power period of the last mark recording period.

According to the present invention, the parameters, which can be complicated, are normalized by the period of the basic clock in order to simplify the parameters as much as possible, the parameters being such as the heating power period, the first time, the second time, the third time, and the fourth time. Further, the normalized parameters are expressed by linear expressions wherein the moving speed is made a variable, and constants of the linear expressions are specified as numeric values within fixed ranges.

In this manner, even when the moving speed in the rotation direction changes according to the position in the radius direction, recording conditions can be easily set up.

The present invention further provides an optical information recording medium on the substrate of which a recording layer for recording marks by the reversible phase change is formed, wherein a laser beam that is irradiated in sync with a basic clock, the period of which varies in inverse proportion to the moving speed at a recording position in the radius direction of the recording layer that rotates at a fixed speed such that information is recorded at a constant linear density. The optical information recording medium is characterized in that recording conditions are preformatted, the recording conditions being normalized by the basic clock period, and for forming an even-number-times mark and an odd-number-times mark by the same number of mark recording periods, each period consisting of a heating power period for fusing the recording layer, and a cooling power period for cooling the recording layer, the periods being repeated in turns in the irradiation period of the laser beam. The even-number-times mark has a length equivalent to an even number times the basic clock period. The odd-number-times mark is longer than the even-number-times mark by one basic clock period.

As described above, since the recording conditions of forming the even-number-times mark and the odd-number-times mark by the same number of the mark recording periods are preformatted into, e.g., a wobble groove of the optical information recording medium, proper marks are recorded on the optical information recording medium.

Here, the recording conditions to be preformatted may include one of the fourth time, which represents the cooling power period of the last mark recording period, and the time of the heating power period of each mark recording period, both times being normalized by the basic clock period. Further, the recording conditions may include the first time by which the first mark recording period is delayed with reference to when forming the even-number-times mark

the second time by which the first mark recording period is made longer than twice the basic clock period, and the third time by which the second last mark recording period is made longer than twice the basic period, the times being normalized by the basic clock period.

Further, the recording conditions to be preformatted may include parameter pairs

$\alpha 1$ and $\beta 1$ that linearly define the normalized first time $Td1/T$ as the moving speed changes;

$\alpha 3$ and $\beta 3$ that linearly define the normalized second time $Td2/T$ as the moving speed changes;

$\alpha 4$ and $\beta 4$ that linearly define the normalized third time $Td3/T$ as the moving speed changes;

$\alpha 0$ and $\beta 0$ that linearly define the normalized fourth time $Td4/T$ as the moving speed changes, and

$\alpha 2$ and $\beta 2$ that linearly define the normalized heating power period $Tmp/T$ as the moving speed changes.

As described above, while the number of parameters is reduced by normalizing the values, appropriate response is obtained to the change of the moving speed depending on the position in the radius direction. Further, pre-formatting of the parameters in the optical information recording medium is facilitated.

The present invention further provides an information recording apparatus for recording information at constant linear density in an optical information recording medium that is rotated at a constant speed, wherein marks, lengths of which differ, are formed by the reversible phase change on the recording layer by a laser beam that is generated based on the information preformatted in the optical information recording medium, and by irradiating the laser beam driven by a pulse train representing data to be recorded according to the moving speed at a position in the radius direction. The information recording apparatus includes

a wobble signal detecting unit for detecting the information that is preformatted in the recording layer,

a record clock generating unit for generating a clock signal, the period of which varies in inverse proportion to the moving speed at a position where the laser beam is irradiated from the laser to the optical information recording medium,

a system controller, having a predetermined table, for extracting mark formation conditions of forming the mark by comparing the information detected by the wobble signal detecting unit with corresponding contents of the predetermined table, and

a recording pulse train generating unit for generating a pulse train by modulating and encoding predetermined data, converting the data into corresponding mark lengths, and generating the pulse train based on the mark lengths, wherein the recording pulse train generating unit generates the recording pulse train based on the converted mark lengths and the mark formation conditions extracted by the system controller.

As described above, since the parameters are obtained by comparing the normalized parameters preformatted in the optical information recording medium and detected by the wobble signal detecting unit with the mark formation conditions described in the table, the recording pulse train generating unit can generate the recording pulse train according to the converted mark length based on the extracted mark formation conditions.

In this case, whether the constant pairs for linearly defining the corresponding parameters are preformatted, or an identifier for identifying the optical information recording medium is preformatted in the optical information recording medium, the parameters can be described to the table of the system controller according to the information that is preformatted in the optical information recording medium.

An embodiment of the present invention further provides another information recording apparatus for recording information at constant linear density in an optical information recording medium that is rotated at a constant angular speed, wherein marks, lengths of which differ, are formed by the reversible phase change on the recording layer by a laser beam driven by a pulse train that is generated based on the information preformatted in the optical information recording medium, and representing predetermined data, the laser beam being irradiated according to the moving speed at a position in the radius direction. The information recording apparatus includes

a wobble signal detecting unit for detecting the information that is preformatted in the recording layer,

a record clock generating unit for generating a clock signal, the period of which varies in inverse proportion to the moving speed at a position where the laser beam is irradiated from the laser to the optical information recording medium, and

a recording pulse train generating unit for generating a pulse train by modulating and encoding the predetermined data, converting the data into corresponding mark lengths, and generating the pulse train based on the converted mark lengths, wherein the recording pulse train generating unit generates the recording pulse train based on the converted mark lengths according to the mark formation conditions that are normalized by the period of the clock signal for forming the marks, which mark formation conditions are extracted from the information detected by the wobble signal detecting unit and based on the period of the clock signal generated by the record clock generating unit.

As described above, the pulse train based on the mark length according to the mark formation conditions can be generated by the recording pulse train generating unit directly acquiring the recording conditions from the normalized parameters preformatted in the optical information recording medium, the normalized parameters being detected by the wobble signal detecting unit.

[Effect of the Invention]

The information recording method, the optical information recording medium, and the information recording apparatus according to the present invention specify a recording strategy that responds to the change of scanning speed with a small number of parameters for a phase-change type optical information recording medium with a high crystallization speed rotating at a constant angular velocity (CAV), information can be recorded at constant recording density with ease.

BRIEF DESCRIPTION OF THE DRAWINGS

Fig. 1 gives pulse diagrams and schematic diagrams for explaining a 1T period recording strategy, and a 2T period recording strategy;
Fig. 2 gives pulse diagrams showing a recording strategy according to an embodiment of the present invention;
Fig. 3 is a graph showing relationships between parameters that are normalized by a basic clock period T and a scanning speed V;
Fig. 4 is a block diagram showing an example of an information recording apparatus according to the embodiment of the present invention; and
Fig. 5 is a graph showing measurement results of jitter at various scanning speeds.

[Description of Notations]

1 optical disk
2 spindle motor
3 rotation control unit
4 semiconductor laser
5 optical head
6 actuator control unit
7 programmable BPF
8 wobble detecting unit
9 address recovery circuit
10 PLL synthesizer
11 record clock generating unit
12 drive controller
13 system controller
14 look-up table
15 ROM
16 EFM encoder
17 mark length counter
18 the pulse quantity control unit
19 recording pulse train control unit
20 multi-pulse generating unit
21 edge selector
22 pulse edge generating unit
23 source of drive current
24 LD driving unit

BEST MODE FOR CARRYING OUT THE INVENTION

Preferred embodiments of an information recording method, an information recording medium, and an information recording apparatus of the present invention are described with reference to attached drawings.

[Outline of 2T period recording strategy]

The information recording method of the present invention is applicable to a phase-change type optical information recording medium, wherein information is recorded by a mark length and space length modulation technique. The mark length and space length modulation technique is an application of a pulse width modulation method (PWM method) to the optical information recording medium, and is widely used because it is capable of higher density recording as compared with a mark position modulation technique.

Examples of the mark length and space length modulation technique are an EFM (8-to-14 modulation) used by the compact disks (CD), and EFM+ (8-to-16 modulation) used by the digital versatile disks (DVD). These modulation techniques require that the mark length and the space length be nT,

where n is a natural number, and T is the basic clock period. Here, the basic clock period T can be set at a suitable value according to the recording density and the scanning speed V of the optical information recording medium.

Further, in order to obtain constant linear density of the information to be recorded, a channel bit length (VxT) has to be constant. For example, the channel bit length is 278 nm for a CD-R/RW disk, and 133 nm for a DVD+R/RW disk.

Further, a range of the natural number n, which specifies the mark length (nT), is dependent on the modulation technique, and the range is from 3 (inclusive) through 11 in the case of EFM, and from 3 (inclusive) through 11 and 14 in the case of EFM+.

When recording the information on the phase-change type optical information recording medium, two or more mark groups having different length are formed by scanning, while irradiating an intensity-modulated laser beam to a recording layer of the optical information recording medium. Generally as the method of the intensity modulation, a multi-pulse strategy is used as in CD-RW and DVD+RW.

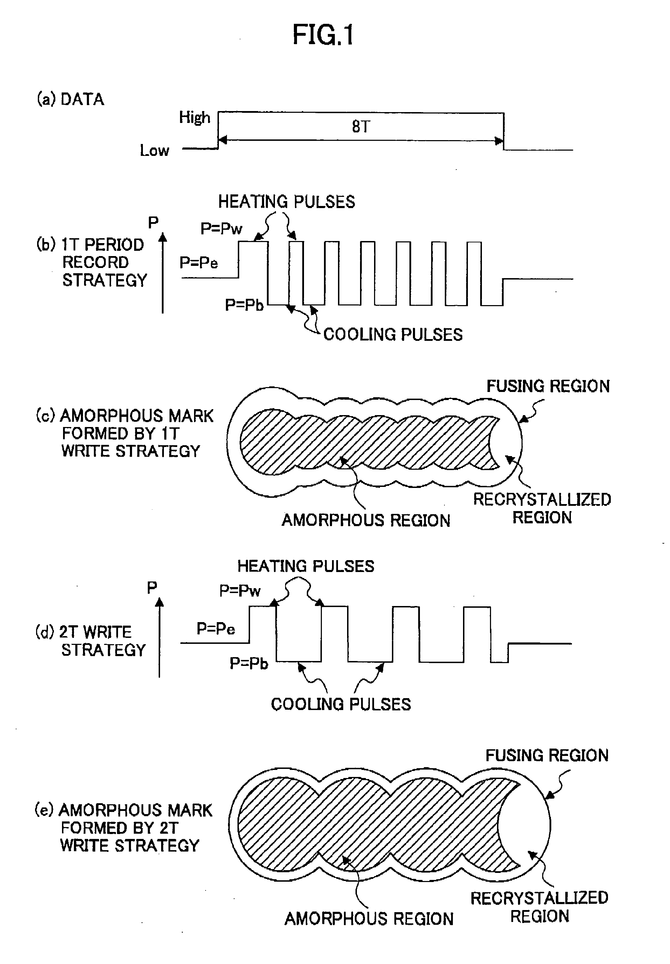

Fig. 1 shows a 1T period recording strategy and a 2T period recording strategy.

For example, when recording a mark having a length nT=8T as shown at (a) of Fig. 1 by the 1T period recording strategy as shown at (b) of Fig. 1, the intensity modulated laser beam that includes seven heating power periods (heating pulses for short) and seven cooling power periods (cooling pulses for short). Here, the vertical axis represents the power of the irradiated laser light and the horizontal axis represents the time.

That is, in a mark recording period, recording is carried out by alternately irradiating the laser beam having the heating pulse of irradiation power Pw, and the cooling pulse of irradiation power Pb (here, Pw>Pb). The recording layer reaches a fusion state by irradiation of the heating pulse, and is then suddenly cooled by the following cooling pulse; in this way, the recording layer becomes amorphous. Further, in a period between marks, a previously recorded mark is erased by irradiating an erasing pulse of the irradiation power Pe (Pw>Pe>Pb), which heats the recording layer higher than the crystallization temperature for erasing, and gradually cools into the crystal state.

There is a relationship between the time length nT of a mark recorded (n is a natural number), and the number m of heating pulses for recording the mark, the relation being m=n-1.

The period of the heating pulse shown at (b) of Fig. 1 is about 1T; accordingly, the recording strategy is called "1T period recording strategy".

If the mark length is desired to be extended by 1T, a pair of the heating pulse and cooling pulse is added, according to the 1T period recording strategy; for this reason, this is a simple recording strategy suitable for the mark length modulation method.

However, if the scanning speed is raised, since the basic clock period T becomes small, compliance of the response speed of the laser beam irradiated tends to be late, and the rise time in Pw and the fall time in Pb pose a problem.

The rise and the fall time at 10-90% of commercially available lasers are 1 ns or greater, usually ranging between 1.5 and 2.0 ns. On the other hand, the basic clock period for recording a mark at 8X speed to a DVD compatible disk is 4.8 ns, and the period of the heating pulse period in 1T period recording strategy is only 4.8 ns. Therefore, the heating pulse is distorted by the rise time of the laser and irradiation energy loss becomes great; for this reason, it is necessary to heat the recording layer with higher power.

Furthermore, the phase-change type optical information recording medium for high-speed recording usually has a high crystallization speed of the recording layer, the mark recording period consisting of the heating pulse and the cooling pulse is short, time for cooling down is not sufficient, and obtaining the amorphous state is difficult.

Then, an amorphous mark is formed by a heating pulse irradiated at a 1T period as shown at (c) of Fig. 1. That is, a central part where the luminous intensity is high is well fused and well cooled, while perimeter sections do not become amorphous, but become recrystallized because of insufficient energy. Furthermore, in order that the recording layer is capable of high-speed recording, the recording layer tends to be easily recrystallized; for this reason, the recrystallized region tends to become large and the amorphous region tends to become small. In addition, since recrystallization advances with remaining heat of an adjoining heating pulse, when the period of the heating pulse is short, the amorphous region becomes even smaller and mark width becomes even smaller. If an optical information recording medium wherein such a mark being short and narrow is recorded is replayed, the reliability of replayed information falls because contrast between the reflection factor of the light in the mark section and the reflection factors of the light in the space section between the marks falls.

In order to solve the problem as described above, the "2T period recording strategy" as shown at (d) of Fig. 1 is used.

According to the 2T period recording strategy, the period of a heating pulse (or mark recording period) is extended to about 2T. For this reason, the recrystallization is prevented from occurring, the amorphous region is enlarged according to irradiation of the heating pulse as shown at (e) of Fig. 1, and the reliability of replay is raised.

Here, a mark recording period is constituted by a heating power period and a cooling power period, and represents a period during which an amorphous region in the shape of a spot is formed.

According to the embodiment of the present invention, two kinds of marks having different mark lengths by one basic clock period (1T) are recorded by the same number of the mark recording periods by adjusting the heating power period, by adjusting the cooling power period, by adjusting the timing between mark recording periods, and by a combination thereof. Further the embodiment provides a recording strategy of recording nine or ten kinds of marks by repeating the mark recording periods 1 through 5 times, and seven times.

As described above, by making the mark recording period contained in the irradiation period of the laser beam approximately twice 1T period recording strategy, the energy loss due to the response time of the laser is reduced and sufficient fusion region is obtained by lower irradiation power, the mark recording period consisting of the heating power period and the cooling power period. Accordingly, sensitivity of the optical information recording medium can be made high.

[The information recording method]

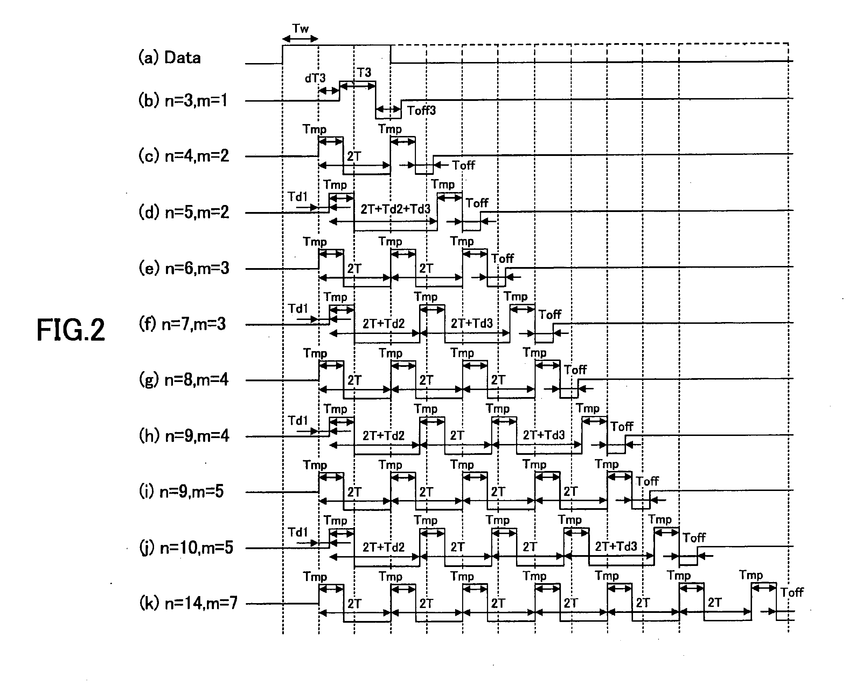

Fig. 2 is a wave form chart showing the recording strategy to which the embodiment of the information recording method of the present invention is applied.

Fig. 2 shows as an example of the recording strategy for EFM+ that is the modulation technique of DVD, wherein the horizontal axis expresses the time. At (a), data expressed by a mark length is presented. At (b) through (k), the heating power period and the cooling power period of the laser beam irradiated for forming mark lengths of 3T through 10T, and 14T, respectively, are given.

Here, as for the time represented by the horizontal axis, the scale is provided at equal intervals for convenience; however, actual time varies as the position where the laser beam is irradiated changes in the radius direction of the optical information recording medium.

That is, when scanning an inner periphery, the scale interval is long, and the scale interval becomes short when scanning an outer perimeter section.

In the following, the position in the radius direction is made the same, and the scanning speed is the same for convenience.

As shown in Fig. 2, the time length of a mark to be recorded is expressed by nT (where, n is a natural number of 3 through 10, and 14; and T is the period of the basic clock), and the number of mark recording periods is expressed by m (i.e., there are m heating pulses and m cooling pulses). Then, there are relations of n=2m+1 where n is an odd number, and n=2m where n is an even number.

That is, two kinds (2m, and 2m+1) of marks having different time lengths are recorded by the same number of the heating pulses and cooling pulses, timing of which is adjusted.

(A) In the case of the time length of the mark being equal to 4, 6 and 8, and 10 or 14 times the basic clock period T, i.e., n is an even number equal to or greater than 4, the mark recording period is set up as follows.

    a. The heating power period Tmp of each heating pulse is set the same whether the number n is even or odd.
    b. The recording period contained in the laser beam, consisting of the heating power period and the cooling power period is set as 2T, except for the second last mark recording period.
    c. The cooling power period Toff of the last mark recording period is set the same regardless of the number n.

In this way, the recording strategy is simplified and the configuration of a pulse generating unit of the recording apparatus is simplified.

Although a proper range of the heating power period Tmp differs with thermal properties of the optical information recording medium to be used, and recording speed (V), i.e., the scanning speed, the range is usually between 0.2T and 1.2T, preferably between 0.3T and 1.0T.

When recording a mark in the same optical information recording medium at different scanning speeds V, the higher the scanning speed is, the longer the heating power period Tmp with reference to the clock period T has to be. In the case of the 8X speed of DVD+RW (scanning speed=27.9 m/s, and T= 4.8 ns), it is desirable to set the heating power period Tmp in a range between 0.7T and 0.9T. Further, in the case of the 3.3X speed of DVD+RW (scanning speed= 11.6 m/S, and T= 11.5 ns), it is desirable to set the heating power period Tmp in a range between 0.3T and 0.5T.

Further, as for the cooling power period Toff of the last record mark, although it is desirable to set up an optimal value for every optical information recording medium so that the mark lengths are aligned, it can be shortened because it is not necessary to take a subsequent heating pulse into consideration as compared with other mark recording periods.

(B) In the case of the time length of the mark being equal to 5, 7, 9, and 11 times the basic clock period T, that is, n is an odd number 5 or greater, the mark recording period is set up as follows.

a. The heating power period Tmp of the heating pulse is the same whether the number of n is even or odd.

b. The first mark recording period (therefore, the first heating power period) is delayed by Td1 in comparison with the case wherein n is an even number.

c. The cooling power period of the first mark recording period and the second last mark recording period is extended so that the mark lengths are aligned.

Specifically, when the number n is an odd number 7 or greater, it is desired that the first cooling power period be extended by Td2, and the second last cooling power period is extended by Td3. Further, in the case of n being equal to 5, the first cooling power period is desired to be set at (Td2+Td3).

Here, it is desirable that Td2 is equal to Td3.

d. The cooling power period Toff of the last mark recording period is the same regardless of the value of the number n.

As described above, in order to record a mark having a length equivalent to an odd number times the basic clock period by the same number of mark recording periods, it is necessary to lengthen the mark recording period by one basic clock period compared with the case where a mark having a length equivalent to an even number times the basic clock period is recorded. On the other hand, if a mark recording period is lengthened, since the influence of remaining heat from an adjoining heating power period is reduced, a recrystallization region becomes small, and an amorphous mark tends to be long and wide.

Consequently, the mark tends to start too early in the front, and shortens the interval from the preceding mark, which causes jitter. For this reason, the heating power period of the first mark recording period for an odd-number-times mark is set to start with a delay compared with the case of an even-number-times mark, and the lengths of the first and the second last mark recording periods are adjusted.

(C) In the case of the time length of the mark being 3 times the basic clock period T, the mark recording period is set as follows.

a. The heating power period by the heating pulse is set to T3.

b. The mark recording period (the heating power period) is delayed by dT3 in comparison with the case where the number n is even.

c. The cooling power period is set to Toff3.

By setting up the mark recording periods as described above, the complicated recording strategy can be specified with a small number of parameters.

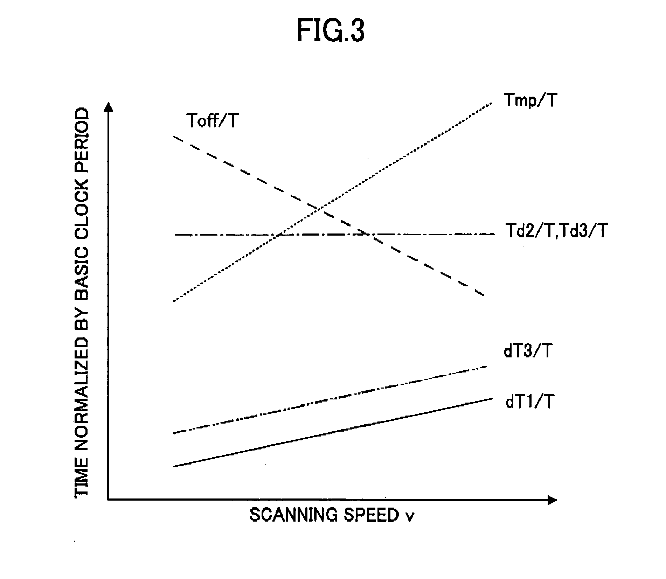

Fig. 3 gives graphs showing relationships between parameters that are normalized by the basic clock period T and the scanning speed V.

The Inventor hereof has conducted a large number of experiments, and has come to know that the parameters can be linearly defined if the parameters described in Fig. 2 are normalized by the basic clock period, even if the scanning speed Varies. In the following, the parameters linearly defined based on this knowledge are described.

The graphs schematically show the linear relationships of Td1, Toff, Td2, Td3, dT3, and Tmp that are normalized by the basic clock period T, namely, Td1/T, Toff/T, Td2/T, Td3/T, dT3/T, and Tmp/T, respectively with the scanning speed V.

By linearly varying Td1/T, Toff/T, Td2/T, Td3/T, dT3/T, and Tmp/T in response to the variation of the scanning speed V as shown in Fig. 3, marks having little variance in lengths can be obtained.

Here, an optimal range of Td1/T is between 0.02 and 0.25, more preferably between 0.02 and 0.13. In the case of, for example, the 8X speed of DVD+RW, the optimal range of Td1/T is between 0.06 and 0.13, in the case of the 3.3X speed of DVD+RW to the same medium, the optimal range of Td1/T is between 0 and 0.05, and in the case of the 10X speed, the optimal range of Td1/T is between 0.15 and 0.25. When recording at a low speed, the heating power period by the heating pulse is long (the basic clock period T is long), reducing the influence of the remaining heat by the adjoining heating pulse. However, when recording at a high speed, the effect of the recrystallization becomes remarkable.

Therefore, it is possible to normalize the amount Td1 of delay by the basic clock period T, and to express it by the following relational expression using the scanning speed V, and it is desirable to make it slow when the scanning speed V is high.

$$Td1/T = \alpha1 \times V + \beta1$$

where $\alpha1$ and $\beta1$ are constants, and it is desirable that $\alpha1$ is set between 0.0070 and 0.0090, and $\beta1$ is set between -0.05 and 0.00.

Further, similarly, it is possible to normalize the last cooling power period Toff by the basic clock period T, and to express it by the following relational expression using the scanning speed V, and it is desirable to make it short when the scanning speed V is high.

$$Toff/T = \alpha0 \times V + \beta0$$

where $\alpha0$ and $\beta0$ are constants, and it is desirable that $\alpha0$ is set between -0.030 and -0.010, and $\beta0$ is set between 0.5 and 0.8.

Furthermore, it is possible to normalize the first cooling power period Td2 and the second last cooling power period Td3 by the basic clock period T, and to express them by the following relational expressions using the scanning speed V, and it is desirable to make the periods short when the scanning speed V is high.

$$Td2/T = \alpha3 \times V + \beta3$$

$$Td3/T = \alpha4 \times V + \beta4$$

where $\alpha3$, $\beta3$, $\alpha4$, and $\beta4$ are constants, and it is desirable that they suffice following formulas, namely,

$$-0.1 <= \alpha3 <= 0.1,$$

$$0.2 <= \beta3 <= 0.5,$$

$$-0.1 <= \alpha4 <= 0.1,$$

and

$$0.2 <= \beta4 <= 0.6.$$

Accordingly, the parameters Td1, Toff, Td2, Td3, dT3, and Tmp can be obtained by calculating Td1/T, Toff/T, Td2/T, Td3/T, dT3/T, and Tmp/T, respectively, based on the constant pairs $(\alpha, \beta)$ that are beforehand acquired according to the optical information recording medium. Alternatively, the parameters can be obtained by preparing a table that beforehand defines Td1, Toff, Td2, Td3, dT3, Tmp, and the like.

[Preformatting for an optical information recording medium]

According to the information recording method of the embodiment, the heating power period and the cooling power period that constitute the mark recording period have to be adjusted such that marks having different lengths are recorded by the same number of mark recording periods. For this reason, each mark parameter has to be set up with high precision. In this view, it is desirable that recording conditions of the mark to be recorded in the optical information recording medium be beforehand embedded, for example, in a wobble signal.

In the optical information recording medium used by the information recording method of the embodiment, the parameters for the recording strategy, i.e., Td1/T, Toff/T, Tmp/T, Td2/T, and Td3/T, or the constant pairs α0 through α4, and β0 through β4 are embedded in the information that is preformatted.

Therefore, the information recording apparatus according to the embodiment can acquire the parameters embedded to the optical information recording medium, for example, from lead in, can set up the recording conditions at the scanning speed V of the recording position in the radius direction according to the acquired parameters, and can record information according to the set-up recording conditions.

Here, preformatting can be performed by a desired technique according to the type of the optical information recording medium to be used. For example, it is common to use pre-emboss-pit for DVD-ROM, wobble-land-pre-pit for DVD-R and DVD-RW, and groove wobble for DVD+R and DVD+RW.

Here, the wobble encoding method is actually adopted by CD-RW and DVD+RW. This technique uses the technology of encoding address information of an optical information recording medium in wobbling of a groove (guidance slot of the medium). Other encoding methods may be used such as frequency modulation including ATIP (Absolute Time In Pregroove) of CD-RW, and phase modulation including ADIP (Address In Pregroove) of DVD+RW. Since the wobble encoding method is realized, when the substrate is formed together with the address information at the time of fabricating the substrate of the optical information recording medium, productivity is high. Further, since a special ROM pit does not have to be formed as required by the pre-pit method, it is advantageous in that the substrate can be manufactured with ease. In the case of CD-RW, the parameters are preformatted as ATIP Extra Information, and in the case of DVD+RW, the parameters are preformatted as Physical Information.

[Information recording apparatus]

Next, the information recording apparatus of the embodiment that uses the information recording method of the embodiment is described.

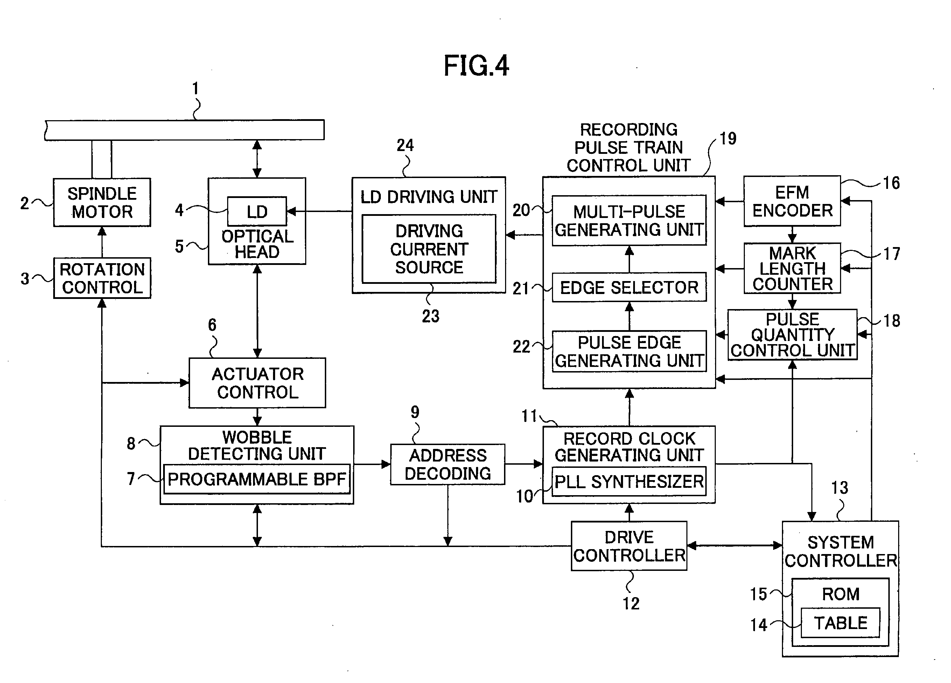

Fig. 4 is a block diagram of the information recording apparatus of the embodiment.

As shown in Fig. 4, the information recording apparatus of the embodiment includes
a spindle motor 2 for rotationally driving a phase-change type optical disk 1,
a rotation control unit 3 for controlling rotation of the spindle motor 2,
a semiconductor laser (LD) 4
an optical head 5 for receiving the light irradiated by the semiconductor laser (LD) 4 and reflected light by the optical disk 1,
an actuator control unit 6 for moving the optical head 5 in the radius direction of the optical disk 1 for seeking,
a programmable BPF 7,
a wobble detecting unit 8 for acquiring a wobble signal from the reflected light received by the optical head 5, the wobble detecting unit 8 containing the programmable BPF 7,
an address recovery circuit 9 for demodulating the wobble signal to acquire the address,
a drive controller 12 for controlling the actuator control unit 6 and the rotation control unit 3 based on the address that the address recovery circuit 9 has acquired,
a record clock generating unit 11 that includes a PLL synthesizer 10 for generating a basic clock based on the address that the address recovery circuit 9 has acquired,
a ROM 15 for storing a look-up table 14 wherein the parameters are described, and
a system controller 13 for controlling information recording by the information recording apparatus based on the address and the basic clock.

The information recording apparatus further includes
an EFM encoder 16 for converting input data that are controlled by the system controller 13 into an EFM signal,
a mark length counter 17 for determining mark length based on the EFM signal,
a pulse quantity control unit 18 for determining the number of pulses corresponding to the determined mark length,
a recording pulse train control unit 19 for generating a multi-pulse according to the number of pulses determined by the pulse quantity control unit 18, and
a LD driving unit 24 for generating driving current for driving the semiconductor laser 4 by outputting the heating pulse, the cooling pulse, and the erasing pulse according to the timing and power of the multi-pulse generated by the recording pulse train control unit 19.

The recording pulse train control unit 19 includes a multi-pulse generating unit 20, an edge selector 21, and a pulse edge generating unit 22. The multi-pulse generating unit 20 sets up timing of a heating pulse and a cooling pulse, and delay time with a multi-stage delay circuit. The pulse edge generating unit 22 generates the rising edge of the last cooling pulse, i.e., a pulse for power level adjustment of the erasing pulse, and edges other cooling pulses. The edge selector 21 selects an edge generated by the pulse edge generating unit 22.

When recording information on the phase-change optical disk 1, for example, the spindle motor 2 is rotationally driven at a constant speed by the rotation control unit 3, and the wobble detecting unit 8 detects the parameters (constant pairs) of $\alpha 0$ through $\alpha 4$, and $\beta 0$ through $\beta 4$ embedded to the lead-in groove of the optical disk 1 from the wobble signal contained in the light reflected by the optical disk 1. The detected parameters are provided to the system controller 13.

Here, the system controller 13 is the socalled microcomputer that includes a CPU and the ROM 15 containing the look-up table 14 for parameter conversion.

According to the address detected by the address recovery section 9, the system controller 13 acquires the scanning speed (basic clock period). Then, the system controller 13 refers to the look-up table 14, and reads the normalized delay time (Td1/T), the normalized last cooling power period (Toff/T), the normalized heating power period (Tmp/T), the normalized delay time (Td2/T) of the cooling power period of the first mark recording period, and the normalized delay time (Td3/T) of the cooling power period of the second last mark recording period at a scanning position in the radius direction of the optical disk 1. Then, the delay times, the cooling power period, the heating power period, and the like corresponding to each address are obtained.

The recording pulse train control unit 19 generates a multi-pulse train corresponding to the data that are encoded by the EFM encoder 16, the mark length of which is counted by the mark length counter 17 and determined by the pulse quantity control unit 18 based on the delay times, the cooling power period, the heating power period, etc., obtained by the system controller 13 according to the address and the basic clock period T of the record clock generating unit 11.

The recording pulse train control unit 19 is connected to the LD driving unit 24 that drives the semiconductor laser LD 4 of the optical head 5 by switching a driving current source 23 that provides irradiation power Pw for heating pulses, irradiation power Pe for erasing pulses, and irradiation power Pb for cooling pulses.

The LD driving unit 24 drives the LD 4 of the optical head 5 and irradiates the laser beam for recording the mark length corresponding to the encoded pulse train to the optical disk 1.

The information recording apparatus described here in the embodiment is an example, and the information recording apparatus of the present invention is not limited to the example. According to the embodiment, the constant pairs are embedded in the optical disk 1, the wobble detecting unit 8 detects the constant pairs, and the normalized parameters are obtained with reference to the table of the system controller 13; however, the normalized parameters may be acquired from the table of the system controller 13 based on an identifier ID that is embedded in the optical disk 1.

Further, it can be configured such that the recording pulse train control unit 19 directly acquires conditions about the pulse train based on the normalized parameters and the basic clock period, the normalized parameters being embedded in the optical disk 1, and detected by the wobble detecting unit 8.

Next, the information recording method of the present invention was evaluated by measuring whether data-to-clock jitter fell within a specified range, wherein information was actually recorded in an optical disk by a recording strategy to which the information recording method of the embodiment was applied.

The optical disk for evaluation included a lower protection layer, a recording layer, an upper protection layer, and a reflective layer that were laminated onto a polycarbonate substrate for DVD+RW that had a continuous spiral groove imprinted. The lower protection layer and the upper protection layer were made of a mixture of ZnS and $SiO_2$, the mol ratio being 80:20. A RF magnetron sputtering method was used for membrane formation. Film thicknesses of the lower protection layer and the upper protection layer were 60 nm and 9 nm, respectively. For the recording layer, a GeSbSn alloy was used, the composition ratio was 14:66:20, and the film thickness was 12 nm. A DC magnetron sputtering method was used for membrane formation. For the reflective layer, Ag was used, and the film thickness was 150 nm. Membrane formation was performed by the same method as the recording layer. Furthermore, on the reflective layer, adhesives for DVD disks were applied and the polycarbonate substrate was pasted.

The disk prepared as above was initialized with an initialization apparatus for phase-change type disks such that it serves as a DVD+RW disk.

Initialization was performed by entirely crystallizing the recording layer using an optical head of 75 $\mu$m beam width at 1200 mW LD power consumption, and a scanning speed of 12 m/s. The reflection factor of the completed disk was about 22% with no recording.

Recording signal property of the disk was evaluated using DDU1000 (made by Pulstec Industrial, Co., Ltd.), an evaluation apparatus of DVD+RW disks. The recording strategy was generated using AWG710 (made by Tektronix), an arbitrary waveform generator.

Next, the parameters of the information recording method of the embodiment were variously changed, and the data-to-clock jitter was measured.

[Operation example 1]

dT3=0.25T
T3=0.69T

Toff3=1.06T
Tmp=0.63T
Td1=0.19T
Td2=0.44T
Td3=0.44T
Toff=0.06T

The basic clock period T was 4.8 ns and the scanning speed V was 27.9 m/s so as to be equivalent to the 8X speed of DVD+RW. Further, the irradiation power was Pw=32.0 mW, Pe=7.2 mW, and Pb=0.1 mW. Then, over-writing was performed 10 times. Then, the data-to-clock jitter was measured, which was 8.6%, and the requirement of the DVD+RW specification (9% or less) was satisfied.

[Operation example 2]

dT3=0.06T
T3=0.44T
Toff3=1.38T
Tmp=0.38T
Td1=0.06T
Td2=0.44T
Td3=0.44T
Toff=0.38T

The basic clock period T was 11.6 ns, and the scanning speed V was 11.5 m/s, equivalent to the 3.3X speed of DVD+RW. The irradiation power was Pw=28 mW, Pe=6.0 mW, and Pb=0.1 mW. Then, over-writing was performed 10 times. Then, the data-to-clock jitter was measured, which was 8.3%, and the requirement of the DVD+RW specification (9% or less) was satisfied.

[Comparative example 1]

An evaluation was conducted by recording on the same medium as Operation example 1 at the 3.3X speed of DVD+RW. Here, the delay time Td1 of the first heating pulse for the case wherein the number n was odd was Td1=0.19T, which is the same as the 8X parameter.

Then, the jitter after ten over-writing processes was 11.6%, largely exceeding the requirement of the DVD+RW specification (9% or less).

[Operation example 3]

The same medium as used in Operation example 1 was evaluated at the scanning speed V= 34.9 m/s and the basic clock period T= 3.8 ns, being equivalent to the 10X speed of DVD+RW. The parameters were as follows.
dT3=0.31.T
T3=0.88T
Toff3=0.75T
Tmp=0.75T
Td1=0.25T
Td2=0.44T
Td3=0.44T
Toff=0.00T
Pw=36 mW, Pe=7.4 mW, Pb=0.1 mW

After recording was performed once under the conditions as above, the jitter was 8.6%, and the good result was obtained. That is, the information recording method can be applied to a higher scanning speed V, such as the 10X speed, by increasing the delay time Td1 with reference to Operation example 1.

[Operation example 4]

Another DVD+RW sample was prepared like Operation example 1, except that the composition ratio of the GeSbSn alloy was 12:68:20. Thereby, the crystallization temperature of the recording layer was lowered, and it was thought that the crystallization speed would become high. That is, higher-speed recording would be available.

This sample was evaluated at equivalent to the 8X speed of DVD+RW like Operation example 1.
dT3=0.25T

## EP 1 662 491 A1

T3=0.69T
Toff3=1.06T
Tmp=0.63T
Td1=0.25T
Td2=0.44T
Td3=0.44T
Toff=0.06T
Pw=34 mW, Pe=7.0 mW, Pb=0.1 mW

Jitter was 8.6% under the conditions above. That is, where the material of the recording layer had a higher crystallization speed, a good recording property was obtained by increasing the delay time Td1.

Next, the recording strategy was specified using the constant pairs, $\alpha$ and $\beta$, described above; eight kinds of the values normalized by the clock period T were calculated; the normalized values were linearly varied according to the scanning speed V; the sample of the disk as prepared in Operation example 1 was rotated at a constant speed of 4600 rpm; a position was moved in the radius direction; various kinds of mark lengths were recorded at various scanning speeds V; and jitter was measured.

Table 1 shows radius positions (disk radius), moving speeds (scanning speeds), eight kinds of normalized values (corresponding to each scanning speed and constant pairs), and basic clock periods.

[Table 1]

| Disk radius (mm) | Scanning speed (m/s) | dT3/T | T3/T | Toff3/T | Tmp/T | Td1/T | Td2/T | Td3/T | Toff/T | T(ns) |
|---|---|---|---|---|---|---|---|---|---|---|
| 58 | 27.9 | 0.25 | 0.69 | 1.06 | 0.63 | 0.19 | 0.44 | 0.44 | 0.06 | 4.78 |
| 50 | 24.1 | 0.21 | 0.63 | 1.14 | 0.57 | 0.16 | 0.44 | 0.44 | 0.14 | 5.54 |
| 40 | 19.3 | 0.15 | 0.56 | 1.23 | 0.50 | 0.12 | 0.44 | 0.44 | 0.23 | 6.92 |
| 30 | 14.5 | 0.09 | 0.48 | 1.32 | 0.42 | 0.08 | 0.44 | 0.44 | 0.32 | 9.23 |
| 24 | 11.6 | 0.06 | 0.44 | 1.38 | 0.38 | 0.06 | 0.44 | 0.44 | 0.38 | 11.54 |
| | $\alpha$(s/m) | 0.0116 | 0.0152 | -0.0195 | 0.0152 | 0.00793 | 0 | 0 | -0.0195 | |
| | $\beta$ | -0.07 | 0.264 | 1.605 | 0.204 | -0.031 | 0.44 | 0.44 | 0.605 | |

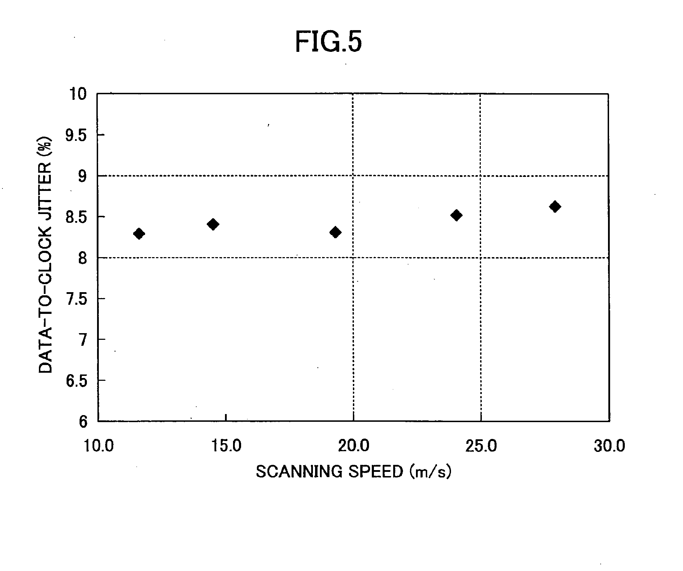

Fig. 5 is a graph showing the measurement results of jitter at the scanning speeds when the recording strategy is set up with the corresponding values shown in Table 1.

As shown in Fig. 5, at all the scanning speeds of 11.6 m/s through 27.9 m/s, the data-to-clock jitter was less than 9%, the requirement (9% or less) of the DVD+RW specification was satisfied, and satisfactory mark recording was made by the recording strategy of the present invention.

[Availability on industry]

The present invention can be applied to manufacturing and selling optical phase-change type information recording media such as CD-RW, DVD-RAM, DVD-RW, and DVD+RW disks in large quantities, such disks including data, voice, and images, and when manufacturing and selling the optical information recording medium for recording data, voice, and an image using an information recording apparatus.

The present application is based on Japanese Priority Application No. 2003-304541 filed on August 28, 2003 with the Japanese Patent Office, the entire contents of which are hereby incorporated by reference.

## Claims

1. An optical information recording method of recording information in an optical recording medium at constant linear density, in which optical recording medium that is rotated at a constant angular speed a mark is recorded by reversible phase change that is caused by irradiating a laser beam driven by a pulse that is intensity modulated in sync with a basic clock, the period of which varies in inverse proportion to a moving speed at a position in a radius direction by forming marks having different lengths by repeating a mark recording period that includes a heating power period during which the optical recording medium is fused, and a cooling power period during which the optical recording medium is cooled, the mark recording period being included in an irradiation period of the laser beam, comprising the step of:

forming a mark having a length equivalent to an even number times the basic clock period, and a mark having a length equivalent to an odd number times the basic clock period, the odd number being greater than the even number by one, by the laser beam that contains a common predetermined number of mark recording periods that include a first mark recording period, a second last mark recording period, and a last mark recording period; wherein
the mark having the length equivalent to an even number times the basic clock period is formed by irradiating the laser beam driven by a pulse train generated with a period twice the basic clock period during the mark recording periods contained in the laser beam except the last mark recording period in sync with the basic clock, and
the mark having the length equivalent to the odd number times the basic clock period is formed by irradiating the laser beam driven by a pulse train in sync with the basic clock, wherein
the first mark recording period of the mark recording periods contained in the laser beam is delayed by a first time with reference to the first mark recording period for forming the mark having the length equivalent to the even number times the basic clock period,
the first mark recording period and the second last mark recording period are generated with a period greater by a predetermined amount than twice the basic clock period, and
other mark recording periods are generated with a period twice the basic clock period.

2. The optical information recording method as claimed in claim 1, wherein
the first mark recording period and the second last mark recording period are made longer than twice the basic clock period by a second time and a third time, respectively, when forming a mark having a length equivalent to an odd number times the basic clock period, where the odd number is 7 or greater.

3. The optical information recording method as claimed in claim 1, wherein
the first mark recording period is made longer than twice the basic clock period by a second time and a third time, respectively, when forming a mark having a length equivalent to 5 times the basic clock period.

4. The optical information recording method as claimed in claim 2 or claim 3, wherein
the second time and the third time are the same.

5. The optical information recording method as claimed in claim 1, wherein
a length of the cooling power period of the last mark recording period is set to a fourth time.

6. The optical information recording method as claimed in claim 1, wherein
the first time is normalized by the basic clock period, and
the normalized first time is increased according to the moving speed.

7. The optical information recording method as claimed in claim 2 or claim 3, wherein
the second time and the third time are normalized by the basic clock period, and
the normalized second time and the normalized third time are increased according to the moving speed.

8. The optical information recording method as claimed in claim 5, wherein
the fourth time is normalized by the basic clock period, and
the normalized fourth time is decreased according to the moving speed.

9. The optical information recording method as claimed in claim 1, wherein
the heating power period of each of the mark recording periods is normalized by the basic clock period, and
the normalized heating power period is increased according to the moving speed.

10. The optical information recording method as claimed in claim 1, wherein
the laser beam includes an erasing power period for erasing a mark recorded on the optical recording medium, during which erasing power period the laser beam is irradiated at power less than the heating power period and greater than the cooling power period, and
the power during the erasing power period is decreased according to the moving speed.

**11.** The optical information recording method as claimed in claim 6, wherein
there is a relationship Td1/T=$\alpha$1 x V + $\beta$1,
where T represents the basic clock period, Td1/T represents the normalized first time, V represents the moving speed, and $\alpha$1 and $\beta$1 are constants taking respective values,

$$0.0070 <=\alpha1 <=0.0090, \text{ and}$$

and

$$-0.05 <=\beta1 <=0.00.$$

**12.** The optical information recording method as claimed in claim 7, wherein
there are relationships

$$Td2/T=\alpha3 \text{ x V} +\beta3 \text{ and } Td3/T=\alpha4 \text{ x V} +\beta4,$$

where T represents the basic clock period, Td2/T and Td3/T represent the normalized second time and the normalized third time, respectively, V represents the moving speed, and $\alpha$3, $\beta$3, $\alpha$4, and $\beta$4 are constants taking respective values,

$$-0.1 <=\alpha3 <=0.1,$$

$$0.2 <=\beta3 <=0.5$$

$$-0.1 <=\alpha4 <=0.1,$$

and

$$0.2 <=\beta4 <=0.6.$$

**13.** The optical information recording method as claimed in claim 8, wherein
there is a relationship Toff/T=$\alpha$0 x V+ $\beta$0, where T represents the basic clock period, Toff/T represents the normalized fourth time, V presents the moving speed, and $\alpha$0 and $\beta$0 are constants taking respective values,

$$-0.030 <=\alpha0 <=-0.010,$$

and

$$0.5 <=\beta0 <=0.8.$$

**14.** The optical information recording method as claimed in claim 9, wherein
there is a relationship Tmp/T=$\alpha$2 x V + $\beta$2, where T represents the basic clock period, Tmp/T represents the normalized heating power period, V represents the moving speed, and $\alpha 2$ and $\beta 2$ are constants taking respective values,

$$0.01 <= \alpha 2 <= 0.02,$$

and

$$0.1 <= \beta 2 <= 0.3.$$

15. An optical information recording medium, on a substrate of which a recording layer that records a mark by reversible phase change is formed, the mark being recorded in constant linear density by a laser beam irradiated in sync with a basic clock, the period of which varies in inverse proportion to a moving speed at a position in a radius direction of the recording layer that is rotated at a constant angular speed, comprising:

preformatting recording conditions that are normalized by the basic clock period for forming a mark having a length equivalent to an even number times the basic clock period, and a mark having an odd number times the basic clock period, the odd number being greater than the even number by 1, with the same number of mark recording periods, each consisting of a heating power period during which the recording layer is fused, and a cooling power period during which the recording layer is cooled, the heating power periods and the cooling power period being alternately repeated in an irradiation period of the laser beam.

16. The optical information recording medium as claimed in claim 15, wherein at least one of a normalized first time, a normalized second time, and a normalized third time is preformatted as the recording conditions for forming a mark having a length equivalent to an odd number times the basic clock period by a plurality of mark recording periods that includes a first mark recording period and a second last mark recording period, wherein the first mark recording period is delayed by the first time with reference to when forming the mark having a length equivalent to an even number times the basic clock period; the first mark recording period is made longer than twice the basic clock period by the second time; and the second last mark recording period is made longer than twice the basic clock period by the third time; the first time, the second time, and the third time being normalized by the basic clock period.

17. The optical information recording medium as claimed in claim 15, wherein one or both a normalized fourth time and the heating power period are preformatted as the recording conditions for forming the mark having the odd number times the basic clock period, the odd number being greater than the even number by one, by a plurality of mark recording periods, the fourth time being equal to the cooling power period of the last mark recording period, wherein the fourth time and the heating power period of each mark recording period are normalized by the basic clock period.

18. The optical information recording medium as claimed in claim 16, wherein at least one of constant pairs $\alpha 1$ and $\beta 1$; $\alpha 3$ and $\beta 3$; and $\alpha 4$ and $\beta 4$ is preformatted as the recording conditions, where T represents the basic clock period, Td1/T represents the normalized first time, Td2/T represents the normalized second time, Td3/T represents the normalized third time, $\alpha 1$ and $\beta 1$ are constants that linearly define Td1/T according to the moving speed, $\alpha 3$ and $\beta 3$ are constants that linearly define Td2/T according to the moving speed, and $\alpha 4$ and $\beta 4$ are constants that linearly define Td3/T according to the moving speed.

19. The optical information recording medium as claimed in claim 17, wherein at least one of constant pairs $\alpha 0$ and $\beta 0$; and $\alpha 2$ and $\beta 2$ is preformatted as the recording conditions, where T represents the basic clock period, Toff/T represents the normalized fourth time, Tmp/T represents the normalized heating power period, $\alpha 0$ and $\beta 0$ are constants that linearly define Toff/T according to the moving speed, and $\alpha 2$ and $\beta 2$ are constants that linearly define Tmp/T according to the moving speed.

**20.** The optical information recording medium as claimed in claim 18, wherein the constants are set as follows:

$$0.0070 <= \alpha 1 <= 0.0090$$

$$- 0.05 <= \beta 1 <= 0.00$$

$$- 0.1 <= \alpha 3 <= 0.1$$

$$0.2 <= \beta 3 <= 0.5$$

$$- 0.1 <= \alpha 4 <= 0.1$$

$$0.2 <= \beta 4 <= 0.6.$$

**21.** The optical information recording medium as claimed in claim 19, wherein the constants are set as follows:

$$- 0.030 <= \alpha 0 <= -0.010$$

$$0.5 <= \beta 0 <= 0.8$$

$$0.01 <= \alpha 2 <= 0.02$$

$$0.1 <= \beta 2 <= 0.3.$$

**22.** An information recording apparatus for forming marks having different lengths on a recording layer of a reversible phase-change type optical information recording medium rotated at a constant speed, and recording information at constant linear density by irradiating a laser beam driven by a pulse train generated based on information preformatted in the optical information recording medium and representing predetermined data according to a moving speed at a position in a radius direction, comprising:

a wobble signal detecting unit for detecting the information preformatted in the recording layer of the optical information recording medium} ;
a record clock generating unit for generating a clock signal, a period of which is varied in inverse proportion to the moving speed of the position in the optical information recording medium onto which the laser beam is irradiated by a laser;
a system controller that holds a predetermined table and extracts mark formation conditions for forming the mark by comparing information contained in the predetermined table with the information detected by the wobble signal detecting unit; and

a recording pulse train generating unit for converting the predetermined data into mark lengths by modulating and encoding the predetermined data, and for generating the pulse train based on the converted mark lengths; wherein

the recording pulse train generating unit generates the pulse train based on the converted mark length based on the mark formation conditions extracted by the system controller.

23. The information recording apparatus as claimed in claim 22, wherein

the optical information recording medium contains the constant pair that linearly define the mark formation conditions according to the moving speed as the information preformatted, and

the system controller holds a correspondence table of the constant pairs and the mark formation conditions, compares the constant pairs detected by the wobble signal detecting unit based on the period of the clock signal generated by the record clock generating unit with the correspondence table, and extracts the mark formation conditions.

24. The information recording apparatus as claimed in claim 22, wherein

the optical information recording medium contains an identifier that discriminates the optical information recording medium, the identifier being preformatted,

the system controller holds a correspondence table of the identifier and the mark formation conditions normalized by the period of the clock signal, and extracts the normalized mark formation conditions by comparing the identifier detected by the wobble signal detecting unit with the correspondence table, and

the recording pulse train generating unit generates a pulse train according to the mark length based on the normalized mark formation conditions extracted by the system controller and the period of the clock signal generated by the record clock generating unit.

25. An information recording apparatus for forming marks having different lengths on a recording layer of a reversible phase-change type optical information recording medium rotated at a constant angular speed, and recording information at constant linear density by irradiating a laser beam driven by a pulse train generated based on information preformatted in the optical information recording medium and representing predetermined data according to a moving speed at a position in a radius direction, comprising:

a wobble signal detecting unit for detecting the information preformatted in the recording layer of the optical information recording medium;

a record clock generating unit for generating a clock signal, a period of which is varied in inverse proportion to the moving speed of the position in the optical information recording medium onto which the laser beam is irradiated by a laser; and

a recording pulse train generating unit for converting the predetermined data into mark lengths by modulating and encoding the predetermined data, and for generating the pulse train based on the converted mark lengths; wherein

the recording pulse train generating unit extracts the mark formation conditions normalized by the period of the clock signal for forming the mark from the information detected by the wobble signal detecting unit, and generates the pulse train according to the converted mark lengths based on the extracted normalized mark formation conditions and the period of the clock signal generated by the record clock generating unit.

# FIG.1

(a) DATA

(b) 1T PERIOD RECORD STRATEGY

HEATING PULSES

$P=Pw$
$P=Pe$
$P=Pb$

COOLING PULSES

(c) AMORPHOUS MARK FORMED BY 1T WRITE STRATEGY

FUSING REGION

AMORPHOUS REGION

RECRYSTALLIZED REGION

(d) 2T WRITE STRATEGY

HEATING PULSES

$P=Pw$
$P=Pe$
$P=Pb$

COOLING PULSES

(e) AMORPHOUS MARK FORMED BY 2T WRITE STRATEGY

FUSING REGION

AMORPHOUS REGION

RECRYSTALLIZED REGION

FIG.2

(a) Data

(b) n=3,m=1

(c) n=4,m=2

(d) n=5,m=2

(e) n=6,m=3

(f) n=7,m=3

(g) n=8,m=4

(h) n=9,m=4

(i) n=9,m=5

(j) n=10,m=5

(k) n=14,m=7

EP 1 662 491 A1

# FIG.3

# FIG.4

EP 1 662 491 A1

# FIG.5

## INTERNATIONAL SEARCH REPORT

| | International application No. |
|---|---|
| | PCT/JP2004/011752 |

**A. CLASSIFICATION OF SUBJECT MATTER**
Int.Cl⁷ G11B7/0045, 7/125

According to International Patent Classification (IPC) or to both national classification and IPC

**B. FIELDS SEARCHED**

Minimum documentation searched (classification system followed by classification symbols)
Int.Cl⁷ G11B7/0045, 7/125

Documentation searched other than minimum documentation to the extent that such documents are included in the fields searched
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-312934 A (Ricoh Co., Ltd.), 25 October, 2002 (25.10.02), Full text; Figs. 1 to 7 & EP 1249834 A2 & US 2002/196324 A1 | 1-21 |
| A | JP 2002-334433 A (Ricoh Co., Ltd.), 22 November, 2002 (22.11.02), Full text; Figs. 1 to 7 & EP 1249834 A2 & US 2002/196324 A1 | 1-21 |

☒ Further documents are listed in the continuation of Box C.　　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 December, 2004 (09.12.04) | 28 December, 2004 (28.12.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2004/011752

C (Continuation).  DOCUMENTS CONSIDERED TO BE RELEVANT

| Category* | Citation of document, with indication, where appropriate, of the relevant passages | Relevant to claim No. |
|---|---|---|
| A | Microfilm of the specification and drawings annexed to the request of Japanese Utility Model Application No. 79435/1988 (Laid-open No. 5111/1990) (Sony Corp.), 12 January, 1990 (12.01.90), Full text; Figs. 1 to 3 (Family: none) | 15-25 |
| A | JP 2003-16644 A (Matsushita Electric Industrial Co., Ltd.), 17 January, 2003 (17.01.03), Full text; Figs. 1 to 7 (Family: none) | 15-25 |
| P,A | JP 2003-331422 A (Ricoh Co., Ltd.), 21 November, 2003 (21.11.03), Full text; Figs. 1 to 25 & EP 1361571 A1  & US 2004/17755 A | 1-25 |
| P,A | JP 2003-331423 A (Ricoh Co., Ltd.), 21 November, 2003 (21.11.03), Full text; Figs. 1 to 25 & EP 1361570 A2  & US 2003/227850 A1 | 1-25 |
| P,A | JP 2004-103175 A (Ricoh Co., Ltd.), 02 April, 2004 (02.04.04), Full text; Figs. 1 to 23 (Family: none) | 1-25 |

Form PCT/ISA/210 (continuation of second sheet) (January 2004)

| **INTERNATIONAL SEARCH REPORT** | International application No. |
|---|---|
| | PCT/JP2004/011752 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
   The inventions of claims 1-14 relate to an optical information recording method using a laser beam driven by a pulse string generated by the reference clock cycle multiplied by two when forming a mark having a length of the reference clock multiplied by an even number or a mark having a length multiplied by an odd number which is greater by one than the even number.

   (Continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐   The additional search fees were accompanied by the applicant's protest.

                           ☒   No protest accompanied the payment of additional search fees.

Form PCT/ISA/210 (continuation of first sheet (2)) (January 2004)

**INTERNATIONAL SEARCH REPORT**

International application No.

PCT/JP2004/011752

Continuation of Box No.III of continuation of first sheet(2)

The inventions of claims 15-21 relates to an optical information recording medium having a preformatted recording condition normalized by the reference clock cycle when forming a mark having a length of the reference clock cycle multiplied by an even number or a mark having a length of the reference clock cycle multiplied by an odd number which is greater by one than the even number, by using the identical number of mark recording periods each consisting of a heating power period for melting the recording layer and the a cooling power period for cooling the recording layer which are alternately repeated during the laser beam irradiation period.

The inventions of claims 22-24 relate to an information recording device having a system controller for extracting the mark formation condition for forming a mark by comparing the information detected by the wobble signal detection unit with a predetermined table.

The invention of claim 25 relates to an information recording device having a recording pulse string generation unit for extracting the mark formation condition normalized in accordance with the cycle of the clock signal forming a mark from the information detected by the wobble signal detection unit and generating a pulse string in accordance with the converted mark length according to the normalized mark formation condition extracted and the cycle of the clock signal generated by the recording clock generation unit.

Form PCT/ISA/210 (extra sheet) (January 2004)